# FASCICULE DE BREVET EUROPEEN

(11) **EP 1 313 924 B1**
(45) Date de publication et mention de la délivrance du brevet: **25.10.2006**
(21) Numéro de dépôt: 01967406.8
(22) Date de dépôt: 30.08.2001
(51) Int. Cl.: E04B 2/88, E06B 3/54, C03C 27/00, B32B 17/10, F16S 1/02, F16B 5/00

(54) **ASSEMBLAGE D'ELEMENTS VERRIERS**
GLASELEMENTVERBINDUNG
GLASS ELEMENT ASSEMBLY

(30) Priorité: 30.08.2000 FR 0011096
(43) Date de publication de la demande: 28.05.2003
(73) Titulaire: SAINT-GOBAIN GLASS FRANCE, 92400 Courbevoie (FR)
(72) Inventeur: NUGUE, Jean-Clément, 60260 LAMORLAYE (FR); VIDAL, Boris, 16600 Touvre (ES); LE BOT, Pierre, 31120 LA CROIX FALGARDE (FR)
(74) Mandataire: Colombier, Christian
(86) Numéro de dépôt international: PCT/FR2001/002704
(87) Numéro de publication internationale: WO 2002/018724

(56) Documents cités:
- EP-A- 0 122 210
- DE-A- 4 409 155
- DE-A- 19 816 099
- FR-A- 1 447 307
- FR-A- 2 314 322
- GB-A- 267 832
- GB-A- 1 094 632
- US-A- 3 767 203

## Description

L'invention se rapporte au domaine du vitrage et concerne plus particulièrement l'assemblage d'éléments verriers, tels que des poutres, raidisseurs, contreventements, piliers...

Dans des domaines variés, mais en particulier dans le domaine du bâtiment, la réalisation d'éléments verriers est limitée par les dimensions auxquelles est disponible le matériau de base que constitue le verre flotté (verre « float ») : en général, une installation de production de verre float délivre des feuilles de verre dont la plus grande dimension est limitée à environ 6 mètres.

Lorsque l'on souhaite réaliser une pièce en verre de plus grande dimension, il est indispensable de réaliser l'assemblage de plusieurs éléments individuels pour constituer un ensemble de la taille désirée.

Une première forme de réalisation de pièces de connexion repose sur le principe du pincement : deux éléments verriers sont pincés entre deux plaques de serrage avec interposition d'un intercalaire de friction. Cette solution présente un inconvénient de nature esthétique, puisque la pièce de connexion crée une interruption dans la transparence du verre.

Dans une autre forme de réalisation, on assemble des éléments verriers dans lesquels ont été pratiqués des perçages, au moyen de pièces de connexion insérées dans lesdits perçages, et qui sont en liaison avec l'épaisseur du verre. Un exemple de tel assemblage est décrit notamment dans la demande européenne EP- 0 887 484. Les éléments verriers sont toujours pris entre des pièces relativement fines en contact avec chaque face desdits éléments, dont la fonction n'est pas de serrer les éléments mais de permettre l'alignement des éléments pour compenser d'éventuels décalages dans le perçage des trous. On parvient ainsi à augmenter la visibilité à travers l'élément verrier, mais il subsiste néanmoins une gêne optique.

Le document FR-A-2 314 322 décrit un mur-rideau constitué par des blocs de verre.

La présente invention a pour but de proposer un système d'assemblage plus esthétique, entravant le moins possible la visibilité à travers les éléments verriers, sans nuire bien entendu à la solidité et à la pérennité de l'assemblage.

Selon l'invention, ce but a été atteint en réalisant une liaison mécanique avec une transmission de forces parallèlement au plan médian du verre et qui fait passer les efforts par le chant de l'élément verrier, à la manière de l'assemblage des pièces d'un puzzle.

A cet égard, l'invention a pour objet un assemblage bord à bord d'éléments verriers sensiblement plans, tels que notamment des éléments de poutre, de raidisseur ou de contreventement, caractérisé en ce que les éléments verriers présentent chacun auxdits bords au moins une découpe mâle et/ou une découpe femelle qui coopère de manière coplanaire avec une découpe femelle et/ou mâle de forme complémentaire.

Selon l'invention, on entend par « sensiblement plan » que l'élément verrier présente une extension suivant au moins une dimension, de préférence suivant deux dimensions, beaucoup plus grande que suivant la ou les dimensions restantes. L'élément verrier est donc de préférence une plaque ou un panneau, mais peut également être une poutre ou un poteau, dont la ou les surfaces peuvent être ouvragées, mais pour lesquels on peut définir au moins un plan médian. Le chant désigne la surface périphérique enveloppant l'épaisseur de l'élément.

L'expression « de manière coplanaire » signifie qu'une découpe mâle s'engage dans une découpe femelle de manière à former une surface sensiblement continue s'étendant dans ou parallèlement au plan médian.

Par « de forme complémentaire », il est entendu qu'une découpe mâle s'insère dans une découpe femelle, soit avec une possibilité de contact parfaitement continu des deux bords ainsi mis en vis-à-vis, soit avec une possibilité de contact même ponctuel sur une partie substantielle desdits bords.

L'assemblage selon l'invention est tel que la liaison entre les éléments verriers n'est démontable que par déplacement des parties de découpe hors du plan des éléments verriers, c'est-à-dire transversalement au plan médian des éléments verriers.

Dans une première forme de réalisation, une découpe mâle d'un élément verrier coopère avec la découpe femelle de l'élément verrier adjacent. La liaison résultant de l'imbrication de deux formes en verre l'une dans l'autre résout parfaitement le problème esthétique à la base de l'invention.

Suivant une autre forme de réalisation, une pièce de liaison présentant les découpes adaptées est intercalée entre les éléments verriers. Une telle pièce de liaison peut être en des matériaux divers, notamment en verre, en métal, en bois ou en matériau composite. Le verre est préféré pour des raisons de continuité optique avec les éléments verriers, toutefois d'autres matériaux peuvent être utilisés pour intégrer un motif désiré à l'ensemble.

L'assemblage selon l'invention procure non seulement un nouvel aspect très esthétique, mais permet en outre de réaliser des liaisons très efficaces, n'introduisant pas de contrainte excessive dans le verre.

A cet égard, il est préférable que lesdites découpes suivent des lignes sans point anguleux. Il est en effet apparu que de tels points anguleux pouvaient être le siège de concentration de contraintes susceptible de provoquer la casse du verre. Ainsi, les découpes suivent avantageusement au moins en partie des lignes courbes.

De préférence, lesdites découpes sont en forme de lignes courbes constituées par le raccordement d'au moins trois portions courbes (notamment de cercle et/ou d'ellipse), dont le centre de courbure est situé alternativement d'un côté et de l'autre du bord de l'élément verrier. Le nombre de portions de cercle ou d'ellipse est variable, notamment en fonction de la longueur des bords à raccorder.

Suivant une réalisation avantageuse, chaque portion courbe a un rayon de courbure compris entre 10 et 100 mm, en particulier chaque portion de cercle ou d'ellipse a un rayon de courbure compris entre 10 et 80 mm.

Généralement, le fond des découpes mâle/femelle reste parallèle au chant des éléments verriers, mais il est aussi possible que lesdites découpes suivent un profil mâle et/ou femelle dans l'épaisseur de l'élément verrier.

Dans une réalisation préférée, un matériau intercalaire est disposé entre lesdites découpes de formes complémentaires.

Ce matériau intercalaire peut être de nature variée, notamment un feuillard métallique, par exemple d'aluminium, une mousse, une colle, un mortier, un plastique dur, ou autre. Ce matériau peut être coloré ou non, ou traité pour revêtir un aspect particulier pour la réalisation d'un motif décoratif au niveau de la liaison. Une colle peut être préférée car elle apporte une composante supplémentaire à la liaison. Il existe des colles incolores ou sensiblement incolores qui donnent l'illusion d'une parfaite continuité de l'ensemble verrier.

Suivant une réalisation intéressante, le matériau intercalaire n'adhère pas à une des découpe complémentaires, ne réalisant pas une jonction collée entre lesdites découpes, mais permet au contraire un glissement relatif d'un élément sur l'autre. Dans le cas où on utilise une colle, ceci peut être atteint grâce à un matériau choisi pour ne pas avoir d'adhésion sur le matériau verrier ou de la pièce de liaison et/ou grâce à un revêtement anti-adhésif prévu sur le fond de la découpe de l'élément verrier ou de la pièce de liaison.

Il est avantageux pour la rigidité de l'assemblage que le matériau intercalaire présente une dureté Shore A de l'ordre de 60 à 95, notamment de 70 à 85. On peut citer à titre d'exemple des colles de type époxy, polyuréthane, cyanoacrylate ou encore de type photodurcissable tel que de l'acrylate modifié. Pour un matériau intercalaire en mortier, du joint HILTI HY50 commercialisé par HILTI convient. On retient également comme plastique dur, du polycarbonate.

Comme dit précédemment les formes mâle et femelle peuvent s'épouser parfaitement continûment le long du bord d'un élément verrier, mais il se peut notamment en raison des tolérances sur l'usinage des découpes que les formes ne s'épousent pas parfaitement. Le matériau intercalaire peut alors être utilisé pour combler entièrement le jeu entre lesdites découpes complémentaires sur toute la longueur des découpes.

En variante, le matériau intercalaire peut combler de manière discontinue le jeu entre lesdites découpes. Par exemple, il peut être constitué de plots de colle disposés en des endroits critiques où la concentration de charge est relativement plus forte qu'ailleurs, leur fonction étant de mieux dissiper les efforts dans tout l'ensemble verrier. Au lieu de plots de colle, on peut disposer dans ledit jeu des pièces de calage, notamment en caoutchouc, en aluminium, que l'on serre avec un couple prédéterminé, au moyen de vis ou autres, en fonction des contraintes locales.

On peut aussi utiliser un matériau intercalaire, tel que des roulements, adapté pour autoriser un déplacement contrôlé en rotation dans leur plan des éléments verriers. Cette possibilité peut être utilisée pour constituer un point haut de fixation d'un élément verrier au gros oeuvre d'une construction, l'élément verrier étant libre de pivoter dans son plan autour dudit point haut. Cette variante de liaison d'un élément verrier sur un élément non verrier est un objet particulier de l'invention.

L'assemblage selon l'invention s'applique à des éléments verriers en verre monolithique trempé, ou bien durci ou recuit, ou en verre feuilleté composé d'au moins deux feuilles de verre solidarisées par un film adhésif intercalaire.

Une réalisation avantageuse avec du verre feuilleté consiste à inverser l'emboîtement de formes sur les deux faces du feuilleté. Ainsi, une première face du feuilleté est une feuille de verre dont le bord présente une découpe mâle et la deuxième face est une feuille de verre dont le bord présente une découpe femelle.

Une autre forme de réalisation comprend l'assemblage par découpes mâle/femelle sur une seule face du feuilleté, et simple aboutement sans découpes (éventuellement par l'intermédiaire d'un matériau intercalaire, notamment un joint ou une colle) sur l'autre face du feuilleté.

L'assemblage selon l'invention permet de reprendre tous les efforts s'exerçant sur la tranche du vitrage. Il peut être indiqué dans certaines applications particulières d'adjoindre des pièces de liaison supplémentaires, notamment pour reprendre des efforts transversaux au plan du verre, comme pour combattre le flambage. Ainsi un assemblage selon l'invention peut comprendre en outre des moyens de fixation complémentaire, notamment sous la forme de goussets enchâssant la zone de bord à bord. Ces moyens complémentaires n'ayant qu'une partie des efforts à reprendre, les pièces correspondantes peuvent être très discrètes, en étant satisfaisant au plan esthétique.

L'assemblage selon l'invention permet de réaliser diverses constructions avec blocage d'un ou deux degrés de liberté en translation dans le plan des éléments verriers.

Une réalisation avantageuse selon l'invention réside dans l'assemblage d'éléments verriers disposés sur chant ou sur tranche, notamment pour constituer un raidisseur ou un élément de paroi. La liaison mécanique procurée par les découpes complémentaires est apte à résister aux sollicitations mécaniques suivant le plan médian des éléments verriers, avec transmission par la tranche des éléments d'efforts ayant aussi bien une composante verticale (poids des éléments verriers) que latérale (transmission au raidisseur des efforts de pression/dépression subis par une façade).

L'assemblage selon l'invention permet ainsi la réalisation d'ensembles vitrés verticaux ou éventuellement inclinés, auto-stables et auto-supportés, constitués d'éléments verriers disposés sur chant assemblés dans une direction verticale mais aussi horizontale.

La possibilité de laisser subsister un jeu entre les éléments verriers rend l'assemblage applicable à des constructions antisismiques, et/ou de résistance garantie en cas d'incendie.

D'autres détails et caractéristiques de l'invention apparaîtront de la description détaillée qui va suivre, faite en regard des dessins annexés sur lesquels :
- la figure 1 représente une vue d'un assemblage d'éléments verriers selon l'invention pour constituer un raidisseur ;
- les figures 2 et 3 représentent différentes formes de découpe ;
- la figure 4 représente une autre forme de réalisation de l'invention avec des pièces de liaison à découpes mâles;
- la figure 5 représente une variante de réalisation de coopération de découpes complémentaires ;
- la figure 6 représente une autre variante de réalisation d'une pièce de liaison à découpe femelle;
- la figure 7 représente une forme de réalisation de l'invention avec des éléments verriers en verre feuilleté.

On précise que par un souci de clarté les différents éléments des objets représentés ne sont pas nécessairement reproduits à l'échelle.

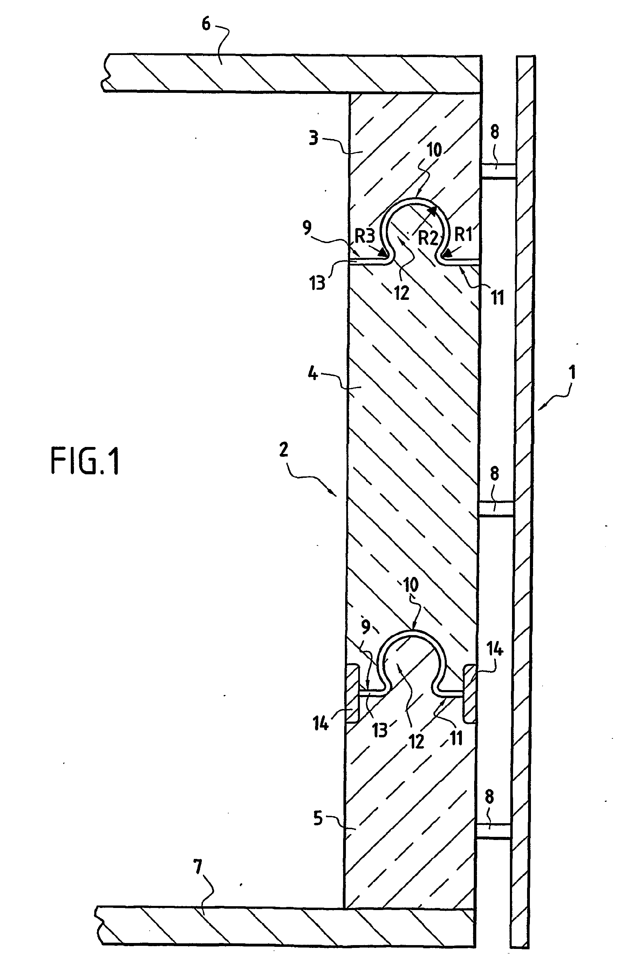

La figure 1 présente une vue de côté d'une façade 1 notamment vitrée, derrière laquelle est disposé un raidisseur ou contreventement 2 fait d'éléments verriers 3,4,5. Un élément verrier supérieur 3 est fixé à un niveau supérieur 6 du gros oeuvre et un élément verrier inférieur 5 est fixé à un niveau inférieur 7 du gros oeuvre par des moyens qui ne seront pas détaillés ici. La liaison du contreventement 2 à la façade 1 est figurée de manière très schématique par les pièces de liaison 8.

Les éléments verriers 3,4,5 sont constitués par des plaques qui peuvent être en verre monolithique trempé, ou bien durci ou recuit, transparent ou opacifié, coloré ou non.

Le raccordement bord à bord de l'élément 3 à l'élément 4 est réalisé comme suit.

Le bord inférieur 9 de l'élément verrier 3 présente une découpe femelle 10 qui suit une ligne courbe approximativement en forme de champignon qui est faite du raccordement d'un première portion de cercle de rayon R1 et dont le centre est situé à l'intérieur de la plaque de verre 3, d'une deuxième portion de cercle de rayon R2 et dont le centre est situé à l'extérieur de la plaque de verre 3 et d'une troisième portion de cercle de rayon R3 = R1 et dont le centre est situé à l'intérieur de la plaque de verre 3.

La découpe peut être réalisée dans un volume de verre parallélépipédique, par tout moyen connu en soi, notamment par découpe au jet d'eau.

Le bord supérieur 11 de l'élément verrier 4 présente une découpe mâle 12 qui suit la même ligne courbe approximativement en forme de champignon et qui est apte à s'insérer dans la découpe femelle 10 avec un jeu de l'ordre de 1 à 2 mm.

Ce jeu est comblé par un joint de colle 13, avantageusement fabriqué à partir d'une composition de faible viscosité coulée dans l'espace entre les deux découpes et durcie notamment sous l'effet de la lumière lorsque l'on utilise un système adhésif de type photodurcissable.

La liaison de l'élément 4 bord à bord avec l'élément 5 présente les mêmes caractéristiques.

Pour lutter contre le flambage du contreventement assemblé 2, on peut ajouter des pièces complémentaires en forme de gousset 14 qui viennent à cheval sur le bord du verre.

Sur la figure 1, chaque élément verrier ne possède qu'une forme mâle/femelle, il est possible en fonction de la longueur du bord de l'élément verrier de réaliser une ligne de découpe reproduisant plusieurs fois ce motif le long du bord de l'élément verrier.

En autre variante, il est possible de réaliser, le long de ladite découpe, une série d'autres découpes analogues mais de taille réduite, puis éventuellement une autre, etc. La ligne de découpe résultante de type fractale donne une ligne de jonction plus longue avec une multiplicité de points d'ancrage, qui permet de dissiper les contraintes sur une surface de verre accrue.

Le test suivant de résistance en flexion illustre les performances de l'assemblage selon l'invention.

On assemble deux plaques de verre trempé, au moyen de découpes telles que 10 et 12 définies par R1 = 41 mm et R2 = 43 mm, avec un joint de colle de 1,5 mm d'épaisseur, de manière à obtenir un panneau assemblé de 940 mm de long, 200 mm de large et 10 mm d'épaisseur. La colle utilisée est une colle photodurcissable de type acrylate modifié de la marque DELO-Photobond 4302 disponible auprès de SUPRATEC.

Ce panneau assemblé est placé dans un appareillage de flexion 4 points avec sa tranche reposant sur deux appuis inférieurs distants de 840 mm, alors qu'on applique sur la tranche une charge verticale entre deux appuis supérieurs distants de 300 mm et équidistants du milieu du panneau. On mesure la charge à rupture en kN. Des capteurs de contrainte enregistrent les contraintes engendrées par la charge dans le verre dans la zone de raccordement.

L'essai se solde par une rupture du panneau pour une charge de 12,8 kN : la rupture débute dans le verre au niveau de la portion la plus étroite de la découpe femelle 12 ; elle n'est pas imputable à la colle.

A titre de comparaison, un panneau de verre ayant les mêmes dimensions d'un seul tenant, lorsqu'il est soumis au même essai, subit une rupture qui démarre sur la tranche inférieure pour une charge appliquée de 29,5 kN. D'autre part, un assemblage traditionnel avec deux plaques métalliques serrées sur les deux faces des éléments verriers par l'intermédiaire de vis traversant les plaques de verre, subit une rupture pour une charge de 8 kN.

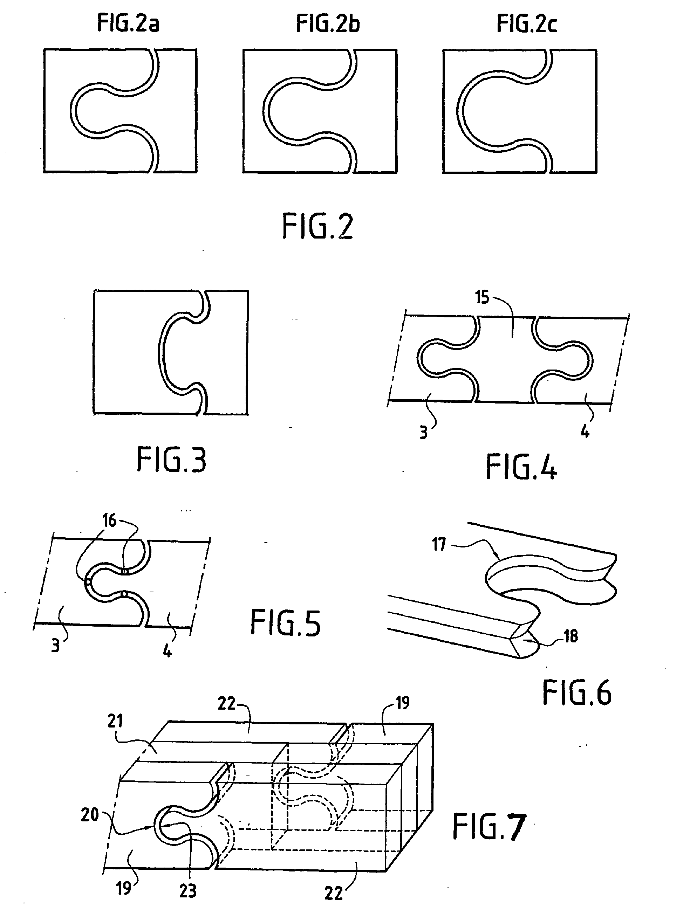

On peut optimiser la résistance de l'assemblage en se rapprochant du comportement d'un panneau monolithique, et ce en ajoutant de l'inertie dans la partie mâle de manière à mieux dissiper la contrainte vers le côté inférieur du panneau assemblé. Ceci s'obtient en modifiant la courbure des découpes. Le tableau suivant récapitule les résultats correspondant aux différentes lignes de découpe illustrées sur les figures 2a, 2b, 2c :

| | Courbures | Charge à rupture |
|---|---|---|
| 2a | R1 = 41 mm | 12,8 kN |
| | R2 = 43 mm | |
| 2b | R1 = 36 mm | 16,5 kN |
| | R2 = 53 mm | |
| 2c | R1 = 31 mm | 18,5 kN |
| | R2 = 63 mm | |

On constate que l'assemblage selon l'invention représente une amélioration remarquable par rapport au système d'assemblage traditionnel par serrage et permet de se rapprocher très nettement des performances du verre.

Un autre profil de découpe optimisé représenté sur la figure 3 suit une ligne courbe faite du raccordement de portions d'ellipses dont les foyers sont disposés alternativement d'un côté et de l'autre du bord de l'élément verrier.

La figure 4 présente une variante de réalisation, où deux éléments verriers 3,4 sont assemblés par l'intermédiaire d'une pièce de liaison 15, qui peut être en verre mais aussi en un autre matériau, notamment en métal. Ce mode de réalisation permet de simplifier la fabrication, en pratiquant toujours la même découpe, ici femelle, à chaque bord de l'élément verrier, alors que la pièce de liaison présente la découpe de forme complémentaire.

La figure 5 illustre une autre forme de réalisation, où le joint de colle 13 est remplacé par des plots 16 faits de colle ou d'un autre matériau disposés çà et là le long des découpes. Il peut également s'agir de roulements qui autorisent une liberté en rotation de l'élément 3 par rapport à l'élément 4 dans le plan du contreventement.

Le fait de laisser subsister un jeu permet aux éléments verriers de se dilater dans une certaine mesure sous l'effet de la chaleur, ce qui rend l'assemblage plus résistant en cas d'incendie ; il permet aussi des déplacements relatifs des éléments verriers, ce qui peut rendre l'assemblage plus résistant en cas de tremblement de terre.

La figure 6 illustre une autre forme de découpe, qui combine une découpe 17 en forme de champignon suivant un côté de l'élément verrier et une découpe 18 en V suivant l'épaisseur de l'élément verrier. Cette découpe peut être réalisée par tout moyen connu en soi, notamment avec une meule. Cette deuxième découpe, lorsqu'elle coopère avec la découpe mâle correspondante, permet de bloquer les mouvements relatifs des éléments verriers transversalement au plan du contreventement.

La figure 7 concerne un assemblage d'éléments verriers en verre feuilleté. Chaque élément verrier se compose :
- d'une première feuille de verre 19 qui présente une découpe femelle 20,
- d'une feuille intercalaire 21 généralement faite d'un film thermoplastique transparent, notamment en polyvinylbutyral (PVB),
- d'une deuxième feuille de verre 22 qui présente une découpe mâle 23.

Le bord de la première feuille 19 est décalé par rapport au bord de la deuxième feuille 22, de telle sorte que les lignes de jonction bord à bord ne soient pas situées au même niveau, afin que les contraintes subies par la jonction liaison sur une face ne coïncident pas avec les contraintes subies par la jonction sur l'autre face, ceci dans le but d'augmenter la solidité de l'assemblage.

L'invention, qui vient d'être décrite dans le cas particulier d'un assemblage bout à bout d'éléments verriers de contreventement, n'est nullement limitée à ce mode de réalisation. Elle s'applique également à l'assemblage d'autres éléments verriers, notamment des poutres ou même des vitrages, par exemple de façade. Dans le cas d'éléments verriers longs, l'assemblage selon l'invention permet aussi bien des liaisons axiales, telles qu'il a été décrit et représenté, que des liaisons obliques ou orthogonales.

## Revendications

1. Assemblage bord à bord d'éléments verriers (3,4,5 :19,22) sensiblement plans, tels que notamment des éléments de raidisseur ou de contreventement (2), les éléments verriers (3,4,5;19,22) présentant chacun auxdits bords (9,11) au moins une découpe mâle (12,23) et/ou une découpe femelle (10,20,17), qui coopère de manière coplanaire avec une découpe femelle et/ou mâle (10,20 ;12,23) de forme complémentaire, **caractérisé en ce que** la liaison entre les éléments verriers (3,4,5 ;19,22) n'est démontable que par déplacement des parties de découpe (10,12,20,23) hors du plan des éléments verriers.

2. Assemblage selon la revendication, **caractérisé en ce qu'**une pièce de liaison (15) présentant les découpes adaptées est intercalée entre les éléments verriers .

3. Assemblage selon la revendication 2, **caractérisé en ce que** la pièce de liaison est en verre, en métal, en bois ou en matériau composite.

4. Assemblage selon l'une quelconque des revendications 1 à 3, **caractérisé en ce que** lesdites découpes sont en forme de lignes sans point anguleux.

5. Assemblage selon la revendication 4, **caractérisé en ce que** lesdites découpes sont en forme de lignes courbes constituées par le raccordement d'au moins trois portions courbes, notamment de cercle et/ou d'ellipse, dont le centre de courbure est situé alternativement d'un côté et de l'autre du bord de l'élément verrier.

6. Assemblage selon la revendication 5, **caractérisé en ce que** chaque portion courbe a un rayon de courbure (R1,R2,R3) compris entre 10 et 100 mm.

7. Assemblage selon l'une quelconque des revendications précédentes, **caractérisé en ce que** lesdites découpes (17) suivent un profil mâle (18) et/ou femelle dans l'épaisseur de l'élément verrier.

8. Assemblage selon l'une quelconque des revendications précédentes, **caractérisé en ce qu'un** matériau intercalaire (13,18) est disposé entre lesdites découpes de formes complémentaires.

9. Assemblage selon la revendication 8, **caractérisé en ce que** ledit matériau intercalaire est une colle (13), notamment incolore ou sensiblement incolore.

10. Assemblage selon la revendication 8 ou 9, **caractérisé en ce que** ledit matériau intercalaire présente une dureté Shore A de l'ordre de 60 à 95, notamment de 70 à 85.

11. Assemblage selon l'une quelconque des revendications 8 à 10, **caractérisé en ce que** ledit matériau intercalaire (13) comble entièrement le jeu entre lesdites découpes complémentaires sur toute la longueur des découpes.

12. Assemblage selon l'une quelconque des revendications 8 à 10, **caractérisé en ce que** ledit matériau intercalaire (16) comble de manière discontinue le jeu entre lesdites découpes.

13. Assemblage selon la revendication 12, **caractérisé en ce que** ledit matériau intercalaire (16) est adapté pour autoriser un déplacement contrôlé en rotation dans le plan des éléments verriers.

14. Assemblage selon l'une quelconque des revendications précédentes, **caractérisé en ce que** les éléments verriers sont en verre monolithique trempé, ou durci ou recuit, ou bien en verre feuilleté.

15. Assemblage selon la revendication 14, **caractérisé en ce que** les éléments verriers sont en verre feuilleté dont chaque face (19,22) est constituée d'une feuille de verre, les feuilles de verre (19,22) étant reliées entre elles par au moins une feuille adhésive intercalaire (21), et **en ce que** la première face est une feuille de verre (22) dont le bord présente une découpe mâle (23) et la deuxième face est une feuille de verre (19) dont le bord présente une découpe femelle (20).

16. Assemblage selon la revendication 15, **caractérisé en ce que** les bords de la première feuille de verre (22) et de la deuxième feuille de verre (19) sont décalés.

17. Assemblage selon l'une quelconque des revendications précédentes, **caractérisé en ce qu'**il comprend en outre des moyens (14) de fixation complémentaire, notamment sous la forme de goussets enchâssant la zone de bord à bord.

18. Application à la réalisation d'assemblage d'éléments verriers selon l'une quelconque des revendications 1 à 17, **caractérisé en qu'**on réalise un blocage d'un ou deux degrés de liberté en translation dans le plan des éléments verriers.

19. Application à la réalisation d'assemblage d'éléments verriers selon l'une quelconque des revendications 1 à 10 ou 12 à 17, **caractérisé en ce qu'**on utilise ces assemblages dans des constructions antisismiques, et/ou résistantes au feu.

## Claims

1. An edge-to-edge assembly of roughly flat glass elements (3, 4, 5; 19, 22) such as, in particular, stiffening or bracing elements (2), the glass elements (3, 4, 5; 19, 22) each having, at said edges (9, 11), at least one male cutout (12, 23) and/or one female cutout (10, 20, 17) which collaborates in a coplanar manner with a female and/or male cutout (10, 20; 12, 23) of complementing shape **characterized in that** the connection between the glass elements (3, 4, 5; 19, 22) can be taken apart only by moving the cutout parts (10, 12, 20, 23) out of the plane of the glass elements.

2. The assembly as claimed in claim, **characterized in that** a connecting piece (15) having the appropriate cutouts is inserted between the glass elements.

3. The assembly as claimed in claim 2, **characterized in that** the connecting piece is made of glass, metal, wood or composite.

4. The assembly as claimed in any one of claims 1 to 3, **characterized in that that** said cutouts are in the form of lines without any sharp corners.

5. The assembly as claimed in claim 4, **characterized in that** said cutouts are in the form of curved lines consisting of the connection of at least three curved portions, particularly portions of circles and/or ellipses, the center of curvature of which lies alternately on one side of the edge of the glass element and then the other.

6. The assembly as claimed in claim 5, **characterized in that** each curved portion has a radius of curvature (R1, R2, R3) of between 10 and 100 mm.

7. The assembly as claimed in any one of the preceding claims, **characterized in that** said cutouts (17) follow a male (18) and/or female profile within the thickness of the glass element.

8. The assembly as claimed in any one of the preceding claims, **characterized in that** an interlayer material (13, 16) is placed between said cutouts of complementing shapes.

9. The assembly as claimed in claim 8, **characterized in that** said interlayer material is an adhesive (13), particularly a colorless or practically colorless adhesive.

10. The assembly as claimed in claim 8 or 9, **characterized in that** said interlayer material has a Shore A hardness of the order of 60 to 95, particularly from 70 to 85.

11. The assembly as claimed in any one of claims 8 to 10, **characterized in that** said interlayer material (13) completely fills the clearance between said complementing cutouts along the entire length of the cutouts.

12. The assembly as claimed in any one of claims 8 to 10, **characterized in that** said interlayer material (16) discontinuously fills the clearance between said cutouts.

13. The assembly as claimed in claim 12, **characterized in that** said interlayer material (16) is designed to allow controlled rotational displacement in the plane of the glass elements.

14. The assembly as claimed in any one of the preceding claims, **characterized in that** the glass elements are made of monolithic toughened or semi-toughened or annealed glass or alternatively of laminated glass.

15. The assembly as claimed in claim 14, **characterized in that** the glass elements are made of laminated glass each face (19, 22) of which consists of a sheet of glass, the sheets of glass (19, 22) being connected together by at least one adhesive interlayer sheet (21), and **in that** the first face is a sheet of glass (22) the edge of which has a male cutout (23) and the second face is a sheet of glass (19) the edge of which has a female cutout (20).

16. The assembly as claimed in claim 15, **characterized in that** the edges of the first sheet of glass (22) and of the second sheet of glass (19) are offset.

17. The assembly as claimed in any one of the preceding claims, **characterized in that** it further comprises additional fixing means (14), particularly in the form of gussets housing the region from edge to edge.

18. An application to the assembling of glass elements as claimed in any one of claims 1 to 17 with the blocking of one or two degrees of translational freedom in the plane of the glass elements.

19. An application to the assembling of glass elements as claimed in any one of claims 1 to 10 or 12 to 17 in antiseismic and/or fire-resistant buildings.

## Patentansprüche

1. Aneinander anstoßende Bindung von im Wesentlichen flachen Verglasungselementen (3, 4, 5; 19, 22) wie insbesondere Versteifungs- oder Querverstrebungselementen (2), wobei die Verglasungselemente (3, 4, 5; 19, 22) jeweils an den Rändern (9, 11) mindestens einen vorstehenden Abschnitt (12, 23) und/oder einen vertieften Abschnitt (10, 20, 17) aufweisen, der coplanar mit einem vertieften und/oder vorstehenden Abschnitt (10, 20; 12, 23) mit komplementärer Form zusammenwirkt, **dadurch gekennzeichnet, dass** sich die Verbindung der Verglasungselemente (3, 4, 5; 19, 22) nur durch Bewegen der Abschnittsteile (10, 12, 20, 23) aus der Ebene der Verglasungselemente heraus lösen lässt.

2. Verbindung nach Anspruch 1, **dadurch gekennzeichnet, dass** ein Verbindungsteil (15), das geeignete Abschnitte aufweist, zwischen den Verglasungselementen eingefügt ist.

3. Verbindung nach Anspruch 2, **dadurch gekennzeichnet, dass** das Verbindungsteil aus Glas, Metall, Holz oder einem Verbundmaterial besteht.

4. Verbindung nach einem der Ansprüche 1 bis 3, **dadurch gekennzeichnet, dass** die Abschnitte die Form von Linien ohne winkligen Punkt haben.

5. Verbindung nach Anspruch 4, **dadurch gekennzeichnet, dass** die Abschnitte die Form von gekrümmten Linien haben, die durch das Aneinanderfügen von mindestens drei insbesondere kreisförmig und/oder elliptisch gekrümmten Teilen gebildet werden, deren Kurvenmitte sich abwechselnd auf der einen oder anderen Seite des Randes des Verglasungselementes befindet.

6. Verbindung nach Anspruch 5, **dadurch gekennzeichnet, dass** jeder gekrümmte Teil eine Kurvenradius (R1, R2, R3) von 10 bis 100 mm besitzt.

7. Verbindung nach einem der vorhergehenden Ansprüche, **dadurch gekennzeichnet, dass** die Abschnitte (17) einem vorstehenden Profil (18) und/oder einem vertieften Profil in der Dicke des Verglasungselementes folgen.

8. Verbindung nach einem der vorhergehenden Ansprüche, **dadurch gekennzeichnet, dass** zwischen den Abschnitten mit komplementärer Form ein Zwischenmaterial (13, 18) angeordnet wird.

9. Verbindung nach Anspruch 8, **dadurch gekennzeichnet, dass** das Zwischenmaterial ein insbesondere farbloser oder im Wesentlichen farbloser Klebstoff (13) ist.

10. Verbindung nach Anspruch 8 oder 9, **dadurch gekennzeichnet, dass** die Shore-A-Härte des Zwischenmaterials etwa 60 bis 95 und insbesondere 70 bis 85 beträgt.

11. Verbindung nach einem der Ansprüche 8 bis 10, **dadurch gekennzeichnet, dass** mit dem Zwischenmaterial (13) das Spiel zwischen den komplementären Abschnitten über die gesamte Länge der Abschnitte vollständig ausgefüllt wird.

12. Verbindung nach einem der Ansprüche 8 bis 10, **dadurch gekennzeichnet, dass** mit dem Zwischenmaterial (16) das Spiel zwischen den Abschnitten diskontinuierlich aufgefüllt wird.

13. Verbindung nach Anspruch 12, **dadurch gekennzeichnet, dass** das Zwischenmaterial (16) geeignet ist, eine kontrollierte Drehbewegung in der Ebene der Verglasungselemente zu ermöglichen.

14. Verbindung nach einem der vorhergehenden Ansprüche, **dadurch gekennzeichnet, dass** die Verglasungselemente aus einem vorgespannten, ausgehärteten oder im Kühlofen abgekühlten monolithischen Glas oder einem Verbundglas bestehen.

15. Verbindung nach Anspruch 14, **dadurch gekennzeichnet, dass** die Verglasungselemente aus einem Verbundglas bestehen, wovon jede Seite (19, 22) von einer Glasscheibe gebildet wird, wobei die Glasscheiben (19, 22) durch mindestens eine haftfähige Zwischenfolie (21) miteinander verbunden sind, **und dass** die erste Seite eine Glasscheibe (22) ist, deren Rand einen vorstehenden Abschnitt (23) aufweist, und die zweite Seite eine Glasscheibe (19) ist, deren Rand einen vertieften Abschnitt (20) aufweist.

16. Verbindung nach Anspruch 15, **dadurch gekennzeichnet, dass** die Ränder der ersten Glasscheibe (22) und der zweiten Glasscheibe (19) gegeneinander versetzt sind.

17. Verbindung nach einem der vorhergehenden Ansprüche, **dadurch gekennzeichnet, dass** sie außerdem komplementäre Befestigungsmittel (14), insbesondere in Form von Einsätzen, die den aneinander anstoßenden Bereich einfassen, umfasst.

18. Verwendung zur Herstellung einer Verglasungselementverbindung nach einem der Ansprüche 1 bis 17, **dadurch gekennzeichnet, dass** in der Ebene der Verglasungselemente ein oder zwei Translationsfreiheitsgrade blockiert werden.

19. Verwendung zur Herstellung einer Verglasungselementverbindung nach einem der Ansprüche 1 bis 10 oder 12 bis 17, **dadurch gekennzeichnet, dass** diese Verbindungen in erdbebensicheren und/oder feuerwiderstandsfähigen Bauwerken verwendet werden.
